Europäisches Patentamt

European Patent Office

Office européen des brevets

(11) Publication number: **0 661 424 A1**

# EUROPEAN PATENT APPLICATION

(21) Application number: **94103852.3**

(22) Date of filing: **12.03.94**

(51) Int. Cl.⁶: **F02B 51/04**, F02B 51/06

(30) Priority: **28.12.93 JP 337334/93**

(43) Date of publication of application:
**05.07.95 Bulletin 95/27**

(84) Designated Contracting States:
**AT BE CH DE DK ES FR GB GR IE IT LI LU MC NL PT SE**

(71) Applicant: **Fujimoto, Shigenobu**
**188, Oaza-Yuritani,**
**Miwa-cho**
**Kuga-gun,**
**Yamaguchi 740-12 (JP)**
Applicant: **Bozono, Hiroyuki**
**7-27-1007, Hakushima-nakamachi,**
**Naka-ku**
**Hiroshima-shi,**
**Hiroshima 730 (JP)**
Applicant: **Nakatani, Yutaka**
**3-9-3-811, Koihonmachi,**
**Nishi-ku**
**Hiroshima-shi,**
**Hiroshima 736 (JP)**

(72) Inventor: **Fujimoto, Shigenobu**
**188, Oaza-Yuritani,**
**Miwa-cho**
**Kuga-gun,**
**Yamaguchi 740-12 (JP)**
Inventor: **Bozono, Hiroyuki**
**7-27-1007, Hakushima-nakamachi,**
**Naka-ku**
**Hiroshima-shi,**
**Hiroshima 730 (JP)**
Inventor: **Nakatani, Yutaka**
**3-9-3-811, Koihonmachi,**
**Nishi-ku**
**Hiroshima-shi,**
**Hiroshima 736 (JP)**

(74) Representative: **Selting, Günther et al**
**Patentanwälte**
**von Kreisler-Selting-Werner,**
**Bahnhofsvorplatz 1 (Deichmannhaus)**
**D-50667 Köln (DE)**

(54) **Hydrocarbon fuel treatment method.**

(57) A hydrocarbon fuel combustion method wherein the hydrocarbon fuel is made to absorb optical energy, for example infrared rays of a wavelength from 3 to 4 $\mu$m, to dissociate by fission the hydrocarbon molecules into free radicals, and a specified magnetic field, for example magnetic field of at least 3500 gauss at 15 MHz or higher is applied to cause resonance absorption of nuclear magnetic energy. Resonance absorption of the optical energy dissociates by fission the hydrocarbon fuel into free radicals, and resonance absorption of the nuclear magnetic energy dissociates by fission the free radicals further into atoms. By applying optical energy, for example infrared rays of a wavelength from 6 to 8 $\mu$m, again for resonance absorption, the state of fuel being dissociated by fission into atoms can be maintained for longer period of time.

EP 0 661 424 A1

Rank Xerox (UK) Business Services
(3. 10/3.09/3.3.4)

Fig. 1

BACKGROUND OF THE INVENTION

Field of the invention

The present invention relates to a combustion method of hydrocarbon fuels.

Description of Related Art

Consumption of hydrocarbon fuels as energy source has been increasing 3 to 5% annually. This has been causing grave public concern in view of the limited reserve of the hydrocarbon fuels and impact of the exhaust gas on the environment. Increasing concentration of $CO_2$ in the atmosphere, in particular, poses a serious threat to the environment. While the limit of $CO_2$ concentration in the atmosphere which can be absorbed by the earth is said to be 0.2%, current level thereof is 0.3% which far exceeds the limit. The increased concentration of $CO_2$ in the atmosphere has been also related to various unusual climatic phenomena including El Nino.

It is also said that depletion of the ozone layer is largely caused by the exhaust gas from jet airplanes flying in the stratosphere, especially $NO_x$ and $SO_x$ turning to nitric acid mist, and sulfuric acid mist through photochemical reactions. Acid rain also originates in the photochemical reactions of $NO_x$ and $SO_x$. The acid rain causes pine trees to wither. This is because the acid rain retards the generation of resin in the pine trees resulting in decreased insect repelling capability of the pine tree, thereby allowing pine bark beetles to reproduce.

Conventional burning method which causes the exhaust emission will be described below. Conventional burning methods, including the highly compressed combustion, are based on natural combustion. It has been said that the combustion energy obtained on the natural combustion is the total energy of the fuel minus the dissociation energy (equivalent to binding energy).

Combustion of hydrocarbon fuels is a process of extracting thermal energy by dissociating by fission the covalently bonded molecules of $C_nH_{2n+x}$ (x = -2, 0, 1, 2) into C (carbon) and H (hydrogen) atoms and then making them to contact with 0 (oxygen) thereby to combine (oxidation) at a high temperature. In the natural combustion, molecules dissociate in such processes as likened to chain reaction while decomposing into various free radicals and the like by its own combustion energy, eventually dissociating into the atomic level thereby to be oxidized. When hydrocarbon molecules are burned completely, carbon dioxide gas and water vapor molecules are generated. In the conventional combustion method (natural combustion), about 2/3 of the total energy is inevitably lost as the dissociation energy during combustion, and cannot be extracted as the combustion energy.

The process of combustion will be described below, taking the case of burning gasoline which has clear structural formula among hydrocarbon fuels, particularly 100% solution of isooctane (straight chain octane having side chains of saturated hydrocarbon, namely 2,2,4 trimethyl pentane) which determines the octane number.

Isooctane has a constitution of $C_8H_{18}$ and molecular weight of 114 g/mol. Dissociation (or binding) energy is 170.9 kcal/mol for C and 52.1 kcal/mol for H. Multiplying these values by the numbers of respective atoms and summing them yield 2305 kcal/mol for the dissociation energy of isooctane. By dividing this by the molecular weight, 20.22 kcal/g is obtained.

Chemical equation of the reaction of burning isooctane (gasoline) in the conventional method (natural combustion) is as follows.

$$C_8H_{18} + 25/2 \cdot O_2 = 8CO_2 + 9H_2O + 1276.2 \text{kcal/mol}$$

Dividing 1276.2 kcal/mol by the molecular weight 114 yields 11.2 kcal/g, which represents the energy obtained resulting from the absorption of the dissociation energy (94.5 kcal/mol) of $CO_2$ and the dissociation energy (57.1 kcal/mol) of $H_2O$. Therefore total energy of $C_8H_{18}$ is given as follows.
20.22 + 11.2 = 31.42 kcal/g
This means that the combustion energy (11.2 kcal/g) which can be extracted from complete combustion is only about 35% of the total energy (31.42 kcal/g). In fact, energy efficiency is 30% at the most even in the jet engine which is characterized by a very high efficiency, with 70% of the energy being lost as the dissociation energy and heat loss.

## SUMMARY OF THE INVENTION

The present invention has been made to solve the problems described above. Object of the invention is to provide a combustion method for hydrocarbon fuels wherein the fuel molecules are dissociated by resonance absorption of optical energy and magnetic energy in the primary, secondary or tertiary dissociation processes, thereby to dissociate the molecules efficiently by using these alternative energy sources, so that the dissociation energy which has been lost in the conventional combustion methods can be extracted as the combustion energy, to improve the fuel efficiency, decrease the consumption of hydrocarbon fuels and also decrease the exhaust emission.

The present inventor disclosed in the Japanese Patent Application Laid-Open No.61-95092 (1986) a combustion method wherein a hydrocarbon fuel is raised to an excited state by means of magnetic field or electromagnetic wave immediately before combustion, thereby controlling the chain reaction during combustion. The present invention is an advanced version of the former invention making the principle clear, and has an excellent applicability to practical use with a good fuel efficiency.

The combustion method of hydrocarbon fuels according to the invention is characterized in that fuel molecules are dissociated by fission into atoms through resonance absorption of optical energy and magnetic energy and the atoms are brought into contact with oxygen and combine therewith. By imparting both the optical energy which can be absorbed in an amount several times to several hundreds times that absorbed by magnetic resonance and the magnetic energy which is capable of dissociating molecules into atoms, it is made possible to carry out combustion with an efficiency higher than in the case of using either one.

In the combustion method of the invention, the process of resonance absorption of the optical energy to dissociate by fission the molecules into radicals is referred to as a primary dissociation, and the process of resonance absorption of the nuclear magnetic energy to dissociate by fission the free radicals into atoms is referred to as a secondary dissociation. Thus the method of the invention is capable of dissociating by fission a hydrocarbon molecule into a plurality of radicals with unpaired electrons through the resonance absorption of optical energy, and dissociating by fission the free radicals into atoms through the resonance absorption of nuclear magnetic energy, thereby burning the fuel with a high efficiency.

Further according to the invention, the process of resonance absorption of the optical energy is applied again to the hydrocarbon fuel in the state of secondary dissociation. The hydrocarbon fuel under the state of secondary dissociation is referred to as a tertiary dissociation, namely being dissociated into atoms, must either return to the ground state after emitting phosphorescence, return to the ground state by combining with other atoms and consuming the binding energy, or return to the ground state by diffusing the thermal energy into the solution. The probability of combining with other atoms is negligibly low. Because the solution is homologous, it is highly probable that the diffused atoms return to the ground state by emitting thermal energy into the solution, which reduces the benefit of fission. Consequently, the excited state can be maintained by minimizing the ratio of atoms which emit phosphorescence and return to the ground state. In the tertiary dissociation process, an action comparable to the optical pumping is obtained by causing resonance absorption of the optical energy once again. This effect elongates the period during which the fuel is in the secondary dissociation state.

The primary dissociation in the method of the invention, in concrete terms, can be achieved by using infrared rays of a wavelength from 3 to 4 $\mu$m. The nuclear magnetic resonance for the secondary dissociation can be achieved by applying a magnetic field of at least 3500 Gauss at 15 mega hertz or higher frequency, in a functional relationship of 234.87 Gauss/MHz. Tertiary dissociation can be achieved by applying infrared light of a wavelength from 6 to 8 $\mu$m. The fuel molecules can be excited more efficiently by employing visible light or ultraviolet rays in the primary or the tertiary dissociation process. This is due to the fact that optical dissociation by fission of the molecules is more violent when the wavelength of visible rays is shorter and further makes remarkable effect when the wavelength of ultraviolet rays is shorter.

The above and further objects and features of the invention will more fully be apparent from the following detailed description with accompanying drawings.

## BRIEF DESCRIPTION OF THE DRAWINGS

FIG.1 is a schematic cross sectional drawing illustrative of a hydrocarbon fuel combustion apparatus used in an embodiment of the invention.

FIG.2 is a schematic longitudinal sectional drawing viewed in II-II direction of FIG.1.

FIG.3 is an oblique view drawing partially broken away illustrative of the detailed constitution of a primary and secondary dissociation device shown in FIG.1.

FIG.4 is a drawing illustrative of the spectrum of infrared ray absorbed by the resonance of isooctane.

FIG.5 is a drawing illustrative of the spectrum of infrared ray absorbed by the resonance of normal heptane.

FIG.6 is a drawing illustrative of the spectrum of infrared ray absorbed by the resonance of normal dodecane.

DESCRIPTION OF THE PREFERRED EMBODIMENTS

Preferred embodiments of the invention will now be described in detail below according to the drawings.

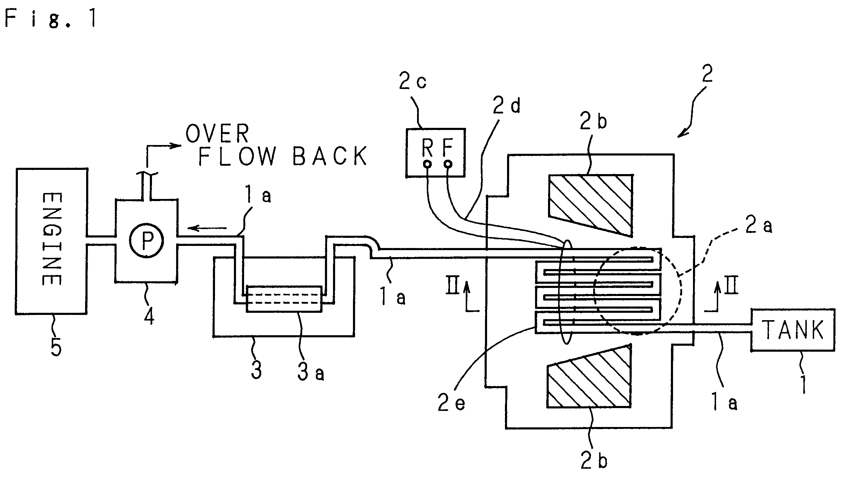

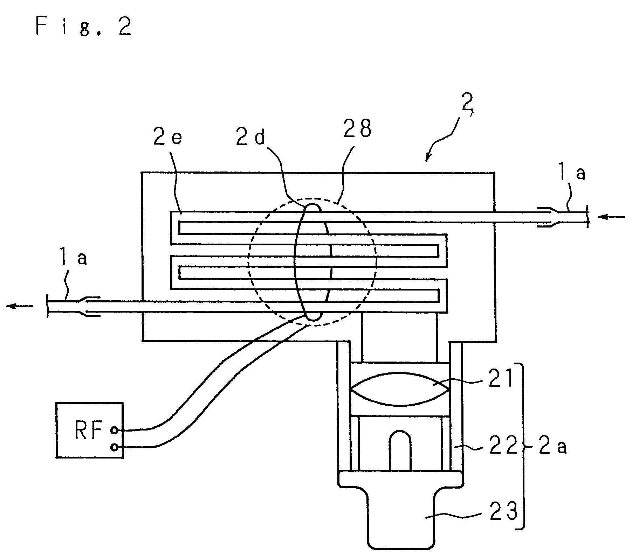

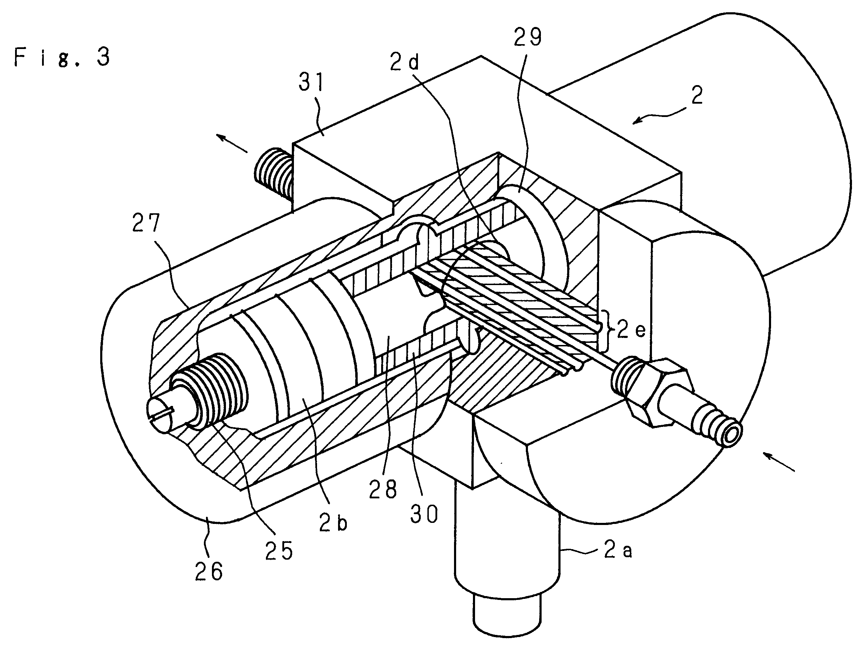

FIG.1 is a schematic cross sectional drawing illustrative of a hydrocarbon fuel combustion apparatus used in an embodiment of the invention. FIG.2 is a schematic longitudinal sectional drawing viewed in II-II direction of a primary and secondary dissociation device shown in FIG.1. FIG.3 is an oblique view drawing partially broken away illustrative of the detailed constitution of a primary and secondary dissociation device shown in FIG.1. Numeral 1 in the drawing denotes a tank to store the hydrocarbon fuel. The tank 1 is connected via a communicating pipe 1a to the primary and secondary dissociation device 2 made of a magnetically permeable material where the primary and secondary dissociation processes take place. The primary and secondary dissociation device 2 is provided with permanent magnets 2b, 2b having a magnetic flux density of 20000 G which constitute a magnetic field sweeping system installed therein. A hydrocarbon fuel passage 2e is installed therein while meandering so that it crosses the magnetic field generated by the permanent magnets 2b, 2b forward and backward several times. The communicating pipe 1a and the passage 2e communicate with each other, so that the hydrocarbon fuel supplied from the tank 1 is introduced into the passage 2e. Further an infrared lamp 2a which emits infrared rays having a wavelength of 3 to 4 $\mu$m is installed close to the tank 1 below the meandering passage 2e. A conductor 2d connected to a high-frequency oscillator (85 MHz) 2c is wound around the meandering passage 2e at the middle section thereof.

The infrared lamp 2a is installed below the primary and secondary dissociation device 2 with a lens 21 and a light source 23 being fastened by means of a packing 22, as shown in FIG.2.

As shown in FIG.3 which illustrates the primary and secondary dissociation device 2 as partially broken away on the side of one permanent magnet 2b, an end of the permanent magnet 2b is connected to an adjust yoke 25 made of a good magnetic material. The adjust yoke 25 is screwed into an outer yoke 26 made of a good magnetic material which houses the permanent magnet 2b. The outer yoke 26 is made in such a shape that has a rounded edge 27 as shown in the drawing to prevent magnetic leakage to the outside, because a sharp edge of the outer yoke 26 will allow the magnetic flux to leak through it to the outside. A tapered portion at an end of the outer yoke 26 is brought into close contact with a tapered portion of a magnetic relay block 31 made of a good magnetic material installed at the center.

Passage 2e side of the permanent magnet 2b is connected to inner yokes 28 made of a good magnetic material which are arranged to oppose each other at a specified distance thereby interposing the passage 2e in-between. The distance between the opposing inner yokes 28 makes an opening of a magnetic path. A spacer 30 made of a nonmagnetic material such as aluminum or stainless steel clamped by a ring spacer 29 which is a retainer ring is installed in contact with the inner yokes 28, thereby keeping a space to resist a strong attracting force of the open magnetic field.

The primary and secondary dissociation device 2 is connected via the communicating pipe 1a to the tertiary dissociation device 3 wherein the tertiary dissociation takes place. The hydrocarbon fuel which has undergone the primary and secondary dissociation processes in the primary and secondary dissociation device 2 is fed to the tertiary dissociation device 3. A ceramic heater 3a made of zirconia zircon formed in pipe shape which emits infrared rays having a wavelength of 6 to 8 $\mu$m is installed in the tertiary dissociation device 3, in such an arrangement as the hydrocarbon fuel flows through, the ceramic heater 3a.

The tertiary dissociation device 3 is further connected via the communicating pipe 1a to an injection pump 4 for combustion and an engine 5. The hydrocarbon fuel which has undergone the tertiary dissociation process in the tertiary dissociation device 3 is sent to the injection pump 4 to be compressed therein with a high pressure before being injected into the engine 5.

Operation of the apparatus of the invention in such a constitution as described above will now be described below. The hydrocarbon fuel supplied from the tank 1 absorbs the infrared rays having a wavelength of 3 to 4 $\mu$m (near infrared) emitted by the infrared lamp 2a through resonance absorption in the primary and secondary dissociation device 2. Then the energy level of the molecules is excited from the ground state to break the bonding of radicals, thereby dissociating into free radicals with unpaired electrons. This process is the primary dissociation.

In the primary and secondary dissociation device 2, a closed magnetic circuit is formed to run from the N pole of the permanent magnet 2b through the adjust yoke 25, the outer yoke 26, the magnetic relay block 31, the outer yoke 26 and the adjust yoke 25 to reach the S pole of the permanent magnet 2b which is the object pole, forming a large external loop. A small loop is also formed to run from the N pole of the permanent magnet 2b through the opposing internal yokes 28, 28 to reach the S pole of the permanent magnet 2b which is the object pole. Thus a complete closed magnetic circuit is formed at more distance from the permanent magnets 2b, 2b than the open magnetic circuit having an opening in the magnetic path. Such a static magnetic field and high-frequency electromagnetic wave perpendicular to the former cause nuclear magnetic resonance of the hydrocarbon fuel, to excite hydrogen and cause dissociation at the level of H and C atoms. This process is the secondary dissociation.

The hydrocarbon fuel which has undergone the secondary dissociation absorbs the infrared rays having a wavelength of 6 to 8 $\mu$m through resonance absorption in the tertiary dissociation device 3, to attain a state capable of maintaining the state of the secondary dissociation for a long period of time. This process is the tertiary dissociation.

The hydrocarbon fuel which has undergone the tertiary dissociation process is injected by the injection pump 4 into the engine 5 where it is burned similarly to the conventional process.

Now the primary, secondary and tertiary dissociation processes will be described concretely below.

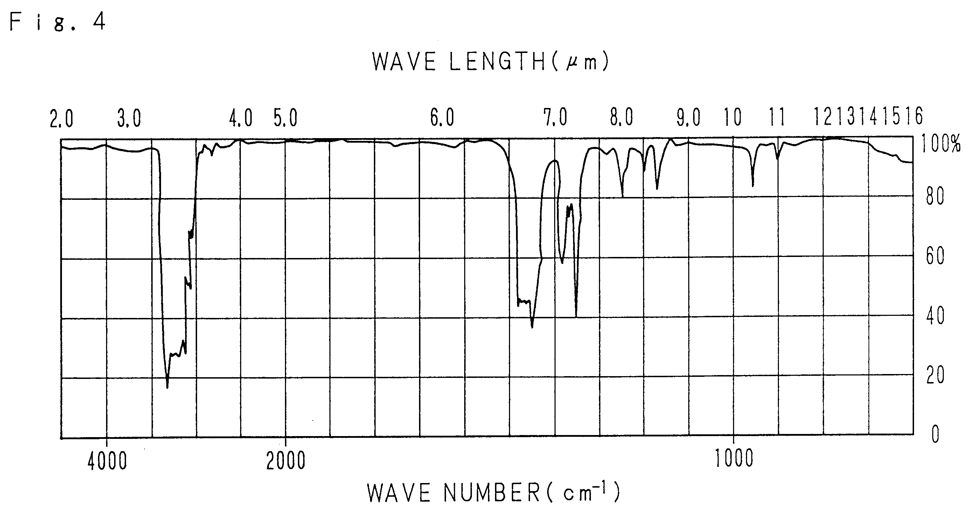

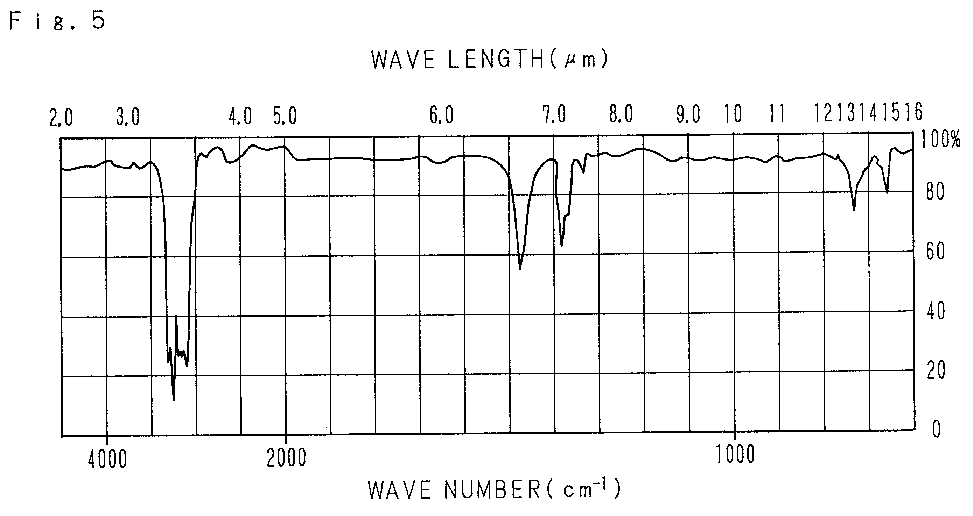

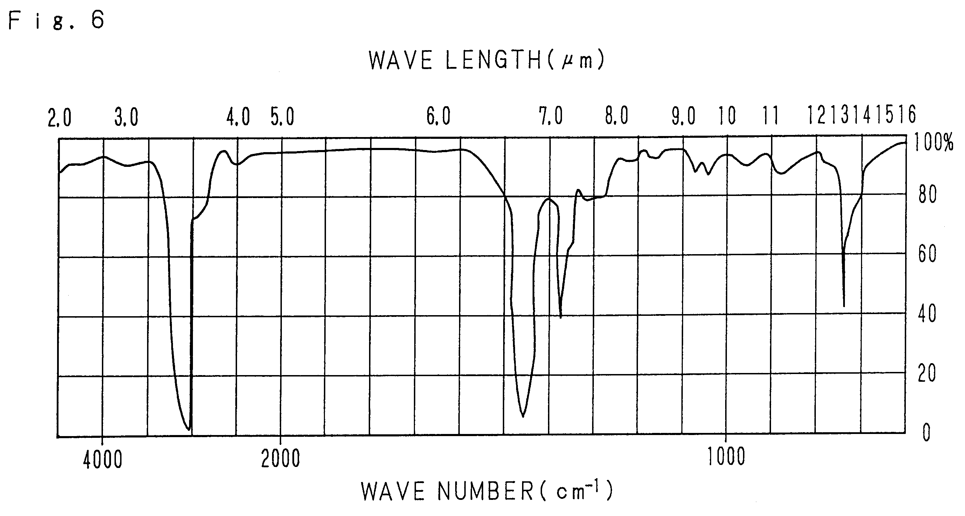

FIG.4, FIG.5 and FIG.6 show wavelengths (wave number) of infrared rays absorbed by the hydrocarbon fuel through resonance. FIG.4 shows the wavelengths (wave number) absorbed by isooctane which is included in gasoline. FIG.5 shows the wavelengths (wave number) absorbed by normal heptane which is included in light oil. FIG.6 shows the wavelengths (wave number) absorbed by normal dodecane included in light oil. FIG.4, FIG.5 and FIG.6 show that any of the hydrocarbon fuels absorb energy through molecular movement in resonance with the infrared rays having wavelengths of 3 to 4 $\mu$m and 6 to 8 $\mu$m. The bandwidth of the resonance absorption remains almost constant with different hydrocarbon fuels. Upon absorption of light, the hydrocarbon fuel molecules are excited to a raised energy level to vibrate and fission.

Isooctane (2-2-4 trimethyl pentane) which is a saturated hydrocarbon has a molecular structure of $CH_3$-$C_3H_6$-$CH_2$-$C_2H_4$-$CH_3$. When the isooctane molecule absorbs infrared rays having a wavelength of 3 to 4 $\mu$m through resonance, the fission energy acts between radicals to cause them to vibrate. This process is governed by Pascal's additive property law so that the absorbed energy is divided with the divided parts acting separately. This causes the isooctane molecules fission into active free radicals having unpaired electrons, namely five methyl radicals (-), one methylene radical (-)(-) and one methine radical (-), under the condition of solution. The dissociation process of the hydrocarbon fuel into a plurality of free radicals as described above will be called the primary dissociation hereinafter. This process can be practically achieved by exposing the circulating fuel to infrared rays having a wavelength of 3 to 4 $\mu$m emitted by an infrared lamp.

Combustion of saturated hydrocarbon is expressed by the following chemical equation.

$$C_nH_{2n+2} + (3n+1)/O_2 \rightarrow nCO_2 + (n+1)H_2O$$

In this process, the fuel molecules break up into C and H atoms which becomes the state of combustion only when being combined by contact with O. In the absorption of energy in the form of light (infrared rays) described above, the absorption takes place in a wide range of wavelengths and almost all of the hydrocarbons can be put into the condition of primary dissociation even with hydrocarbon fuels wherein a plurality of hydrocarbons are mixed. However, in the primary dissociation, there is no matching resonance absorption region wherein enough energy is absorbed to dissociate the molecules to atoms. Consequently, hydrocarbon molecules in the state of fission according to the primary dissociation are in the course of chain reaction still retaining some of the molecular structure, and are not dissociated to be ready for combustion. Also because absorbed wavelength in the visible rays and ul raviolet region varies greatly depending on the composition of the hydrocarbon, these portions of the spectrum are not suited to apply to a fuel which is a mixture of a plurality of hydrocarbons, although it has an advantage for the application to a particular hydrocarbon. Amounts of electromagnetic energy absorbed through resonance in the respective portions of the spectrum are shown in the table below.

| Kind of electromagnetic wave | Wavelength (nm) | Energy (kJ/mol) | Frequency (Hz) |
|---|---|---|---|
| Ultraviolet rays | 200~400 | 300~600 | $(0.75~1.5) \times 10^{15}$ |
| Visible rays | 400~800 | 150~300 | $(0.4~0.75) \times 10^{15}$ |
| Infrared rays | 2000~16000 | 7.5~60 | $(0.2~1.5) \times 10^{14}$ |
| Electron spin resonance | $<10^5$ | $<1$ | $10^{11}~10^{12}$ |
| Nuclear magnetic resonance | $10^{10}~10^{11}$ | $10^{-6}~10^{-5}$ | $10^{6}~10^{7}$ |

Note that; $energy = \dfrac{(1.1963 \times 10^{-1} \; Jm/mol)}{Wavelength}$

Secondary dissociation causes the state of fission of molecular fragments generated in the primary dissociation into atoms by means of nuclear magnetic resonance. The working principle applied to the secondary dissociation is described in "A comment on organic electron theory" by Minoru Imoto, published by Tokyo Kagaku Dojin.

Protons and neutrons which constitute a nucleus make respective intrinsic spin movements, and the entire nuclear spins about an axis passing through the center of gravity of the nuclei. Because the nucleus has an electric charge, spin of the nucleus generates a magnetic field which is equal to the magnetic field generated by an equivalent bar magnet placed along the axis of spin. When a nucleus having such a magnetic field is placed in an external magnetic field, it is aligned in orientations of different energy levels due to the interaction with the external magnetic field.

The number of orientations is determined by a value characteristic of each kind of nuclei which is called nuclear spin I. A nucleus having nuclear spin I which is placed in an external magnetic field is split to $(2I+1)$ energy levels. In the case of a proton which make up the nuclei of hydrogen, for example, it takes two orientations in an external magnetic field because its nuclear spin is 1/2: one is with the magnetic field which is stable, and another is against tile magnetic field which is unstable. The directions of the magnetic field and the nuclear spin under this condition do not necessarily coincide. This situation is similar to a gyroscope making precession while spinning under the influence of the gravity. The nuclei makes precession about an axis which is along the external magnetic field. The stable spin and the unstable spin have energy difference of $2\mu H_o$, where $\mu$ is the magnitude of nuclear magnetic moment and $H_o$ is the intensity of the external magnetic field. Frequency of the electromagnetic wave having this value of energy is exactly the frequency of the precession. Thus the energy of electromagnetic wave having this frequency makes resonance with the precession and is absorbed by the spinning proton. As a result, the proton is excited, being raised from a low energy level to a higher energy level.

Frequency of nuclear magnetic resonance is highest, about 42 MHz, in the case of hydrogen nuclei under a magnetic field of 10000G (gauss), and gradually decreases as the atomic weight increases, being in a range from several mega hertz to 42 MHz.

When all covalent bonds with H (hydrogen) which has high electron density around the proton, for example C-H covalent bonds, of the hydrocarbon fuel are put into the state of resonance absorption of energy, all free radicals produced in the chain reactions of combustion are made highly reactive and therefore branching chain reaction is enhanced.

In a functional relationship of 234.87 gauss/MHz, most outstanding peak of absorption takes place at 14000 gauss/60MHz, with other peaks occurring at magnetic field intensities of this value times 2, 3, 1/2, 1/3 and so on. Minimum value among these peaks, having useful effect is 3500 gauss/15MHz. Thus C-H bond and C-C triple bonds can be dissociated by fission the molecules into atoms by applying magnetic fields of 3500 gauss at 15 MHz or higher.

Tertiary dissociation is carried out in order to maintain the condition of secondary dissociation described above. Because hydrocarbon absorbs infrared rays having a wavelength of 3 to 4 $\mu$m and 6 to 8

μm as shown in FIG.4, FIG.5 and FIG.6, while the energy in the band 6 to 8 μm is used in excitation (that is, absorption of the vibration energy), thereby acting to prevent the atoms in the solution under secondary dissociation from returning to the ground state. This phenomenon can be likened to the optical pumping in producing laser light, and has an effect of sustaining the fission and dissociated state. Although this sustained period varies depending on the condition, excited state generated only by the primary and secondary dissociations which lasts only several minutes can be sustained for about 72 hours by the use of the tertiary dissociation. By making use of the tertiary dissociation, it is made possible to burn hydrocarbon fuels without consuming the self-dissociation energy at all.

Use of the primary and secondary dissociation processes reduces the exhaust emission to less than half that of the natural combustion (conventional method), and increases the mileage by 20 to 50%. Further, the tertiary dissociation improves the mileage from 18 km/liter when only primary and secondary dissociation processes are used, to 48 km/liter, reduces the exhaust emission from 38% (primary and secondary dissociation only) to 8% with the emission from natural combustion being set to 100%, and improves the output power from 77HP to 96HP.

Comparison of the method of the invention wherein the primary, secondary and tertiary dissociation processes are employed and the case of individual dissociation in running at 80 km/h is shown in the table below.

| | Improvement in output | Mileage improvement | Emission reduction | Reproducibility |
|---|---|---|---|---|
| Invention | >20% | 100% | >50% | High |
| ① | - | 10~20% | 10% | Poor |
| ② | 10% | 20~50% | 50% | Poor |
| ③ | 20% | 100% | <35% | Relatively high |

The invention can be embodied as described below. In the primary dissociation wherein resonance absorption of light is used, infrared lamp emitting infrared rays of a wavelength from 3.2 to 3.6 μm is used to cause resonance absorption at two points. The secondary dissociation wherein the nuclear magnetic resonance is carried out by applying a magnetic field of 2000 Gauss with output of 0.1W at 85 MHz for about 6 seconds. Tertiary dissociation which uses resonance absorption of light is achieved by applying infrared rays of a wavelength from 6.8 to 7.4 μm irradiated by a ceramic heater for at least 2 seconds.

In the table above, ① shows a case of using a technology of generating a strong magnetic field by means of a static magnet and passing the magnetic field line several times (former Soviet Academy of Sciences), ② shows a case of forming a magnetic lens by means of a static magnet and generating extremely strong magnetic field at more than 100 places. ③ shows a case without primary dissociation and applying static magnetic field (10000G, 104 zones) for 3 seconds, not using nuclear magnetic resonance, in the tertiary dissociation.

While the combustion temperature is 2300 to 2500°C and the combustion speed is 15 to 25 m/sec in an internal engine based on the conventional method, the combustion temperature is above 3000°C and the combustion speed exceeds 50 m/sec in an internal engine based on the method of the invention. Moreover, because the heat loss decreases and mechanical energy increases due to rapid expansion of the gas which make it possible to increase the output power, the invention enables it to burn even a diluted fuel at a high compression ratio without causing knocking, thereby improving the mileage. Exhaust gas can also be reduced by complete combustion.

An combustion engine wherein the invention produces the greatest effect is a jet turbine engine. This is because a jet turbine engine has such a constitution that has no limitation on the reaction with air (oxygen). Combustion engines which benefit from the invention next to the above are burner combustion units such as boiler and stoves, followed by low-speed diesel engine, then by high-speed diesel engine and gasoline engine in this order. Even in high-speed diesel engines and gasoline engines, the invention has outstanding effects such as 100% increase in the mileage, and accordingly the exhaust gas emitted can be decreased to about 1/2.

As described above, because the combustion method for hydrocarbon fuels of the invention is capable of increasing the mileage and decreasing the consumption of hydrocarbon fuels, and further decreasing the exhaust gas emitted, it is capable of making great contributions to the environment conservation.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within metes and bounds of the claims, or equivalence of such metes and bounds thereof are therefore intended to be embraced by the claims.

## Claims

1. A hydrocarbon fuel combustion method characterized in that the fuel is made to absorb optical energy and magnetic energy through resonance to dissociate by fission it into atoms, then brought into contact with oxygen and combine therewith.

2. The hydrocarbon fuel combustion method of claim 1, wherein the fuel is dissociated into free radicals through resonance absorption of optical energy as a primary dissociation process, and the free radicals are further dissociated into atoms through resonance absorption of nuclear magnetic energy as a secondary dissociation.

3. The hydrocarbon fuel combustion method of claim 2, wherein the hydrocarbon fuel which has been dissociated in the secondary dissociation process is made to absorb optical energy again in a tertiary dissociation process.

4. The hydrocarbon fuel combustion method of claim 2, wherein infrared rays of a wavelength from 3 to 4 $\mu$m is used in the primary dissociation process.

5. The hydrocarbon fuel combustion method of claim 2, wherein magnetic field of at least 3500 gauss at 15 MHz or higher is used in a functional relationship of 234.87 gauss/MHz for the nuclear magnetic resonance in the secondary dissociation process.

6. The hydrocarbon fuel combustion method of claim 3, wherein infrared rays of a wavelength from 6 to 8 $\mu$m is used in the tertiary dissociation process.

7. The hydrocarbon fuel combustion method of claim 2, wherein visible rays or ultraviolet rays is used in the primary dissociation process.

8. The hydrocarbon fuel combustion method of claim 3, wherein visible rays or ultraviolet rays is used in the tertiary dissociation process.

Fig. 1

OVER
FLOW BACK

ENGINE

OVER FLOW BACK

P

1 a

1 a

3

3 a

RF

2 c

2 d

2 b

2

2 a

II

II

2 e

2 b

TANK

1 a

1

4

5

EP 0 661 424 A1

Fig. 2

Fig. 3

Fig. 4

WAVE LENGTH(μm)

WAVE NUMBER( cm⁻¹ )

EP 0 661 424 A1

Fig. 5

Fig. 6

WAVE LENGTH($\mu$m)

EP 0 661 424 A1

WAVE NUMBER($cm^{-1}$)

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US-A-4 569 737 (SAKATA)<br>* column 2, line 55 - line 63 *<br>* column 3, line 37 - column 7, line 4; figures * | 1,2 | F02B51/04<br>F02B51/06 |
| A | GB-A-2 185 783 (VENCZEL)<br>* the whole document * | 1,2 | |
| A | GB-A-2 119 278 (NEARY)<br>* abstract *<br>example 4 | 1,2 | |
| A | US-A-3 976 726 (JOHNSON)<br>* column 2, line 4 - column 5, line 51; figures * | 1,2 | |
| A | EP-A-0 545 704 (SHINFUJI KOGYO KK)<br>* abstract * | 1,2,5 | |
| A | PATENT ABSTRACTS OF JAPAN<br>vol. 17, no. 558 (M-1493) 7 October 1993<br>& JP-A-05 157 220 (ATSUO UZAKI) 22 June 1993<br>* abstract * | 1 | TECHNICAL FIELDS SEARCHED (Int.Cl.6)<br><br>F02B<br>F02M |
| A | PATENT ABSTRACTS OF JAPAN<br>vol. 15, no. 81 (M-1086) 25 February 1991<br>& JP-A-02 301 657 (TOMONOBU MAEDA) 13 December 1990<br>* abstract * | 1 | |

The present search report has been drawn up for all claims

| Place of search | Date of completion of the search | Examiner |
|---|---|---|
| THE HAGUE | 24 March 1995 | Mouton, J |

EPO FORM 1503 03.82 (P04C01)